# EUROPÄISCHE PATENTSCHRIFT

(11) **EP 3 609 819 B1**
(45) Veröffentlichungstag und Bekanntmachung des Hinweises auf die Patenterteilung: **18.06.2025**
(21) Anmeldenummer: 18703969.8
(22) Anmeldetag: 06.02.2018
(51) Int. Cl.: B65B 59/00, B65G 21/10, B65B 65/00, B65G 21/14

(54) **VORRICHTUNG UND VERFAHREN ZUR BILDUNG VON GEBINDEN**
APPARATUS AND METHOD FOR FORMING PACKS
ARRANGEMENT ET PROCÉDÉ DE FORMATION DE RÉCIPIENTS

(30) Priorität: 10.04.2017 DE 102017107609
(43) Veröffentlichungstag der Anmeldung: 19.02.2020
(73) Patentinhaber: KHS GmbH, 44143 Dortmund (DE)
(72) Erfinder: STUHLMANN, Christopher, 34497 Korbach (DE); KLUMPE, Karl-Heinz, 47533 Kleve (DE); WAGNER, Stefan, 47533 Kleve (DE); KOPPERS, Jörg, 47589 Uedem (DE)
(86) Internationale Anmeldenummer: PCT/EP2018/052849
(87) Internationale Veröffentlichungsnummer: WO 2018/188831

(56) Entgegenhaltungen:
- EP-A1- 1 223 105
- JP-A- H02 127 207
- US-A1- 2007 187 211
- US-A1- 2012 023 866
- US-A1- 2012 298 484
- US-A1- 2015 144 536

## Beschreibung

Die Erfindung bezieht sich auf eine Vorrichtung und ein Verfahren zur Bildung von Gebinden aus mehreren Verpackungseinheiten.

Vorrichtungen zur Bildung von Gebinden, auch Verpackungsvorrichtungen genannt, sind an sich bekannt. Insbesondere sind Verpackungsvorrichtungen bekannt geworden, die sich an unterschiedliche Betriebsmodi anpassen lassen (z.B. EP 1 223 105 A1, US 2012/0023866 A1, DE 10 2010 050 524 A1 und JP H02 127207 A).

US 2012/023866 A1 offenbart die Merkmale aus dem Oberbegriff des Anspruchs 1.

Bei einer bekannten Vorrichtung kann eine zwischen zwei Transporteinrichtungen befindliche weitere Transporteinrichtung, die in einem erste Betriebsmodus verwendet wird, durch eine Austauschtransporteinrichtung ersetzt werden, um die Vorrichtung zur Herstellung eines anderen Gebindetyps umrüsten und damit in einem zweiten Betriebsmodus betreiben zu können. Beispielsweise ist die Vorrichtung dazu ausgebildet, in einem ersten Betriebsmodus Gebinde umfassend mehrere Verpackungseinheiten zu bilden, bei denen die Verpackungseinheiten auf einem Kartonboden aufstehen und anschließend zusammen mit dem Kartonboden durch eine Folie, insbesondere eine Schrumpffolie umhüllt werden. In einem zweiten Betriebsmodus der Vorrichtung werden Gebinde umfassend mehrere Verpackungseinheiten, bspw. Behälter, Flaschen oder dergleichen ohne einen solchen Kartonboden gebildet, und zwar beispielsweise derart, dass lediglich eine Gruppe von Verpackungseinheiten ohne unterseitigen Kartonboden durch eine Folie, insbesondere eine Schrumpffolie umhüllt werden (sog. Film-only).

In dem ersten Betriebsmodus kann es nötig sein, dass der Kartonboden an mehreren Kanten gefaltet wird, wobei die zwischen zwei Transporteinrichtungen befindliche weitere Transporteinrichtung derartige Faltwerkzeuge aufweist.

Um die Vorrichtung in den genannten Betriebsmodi betreiben und damit die unterschiedlichen Gebindetypen herstellen zu können, ist es notwendig, die weitere Transporteinrichtung durch die Austauschtransporteinrichtung zu ersetzen.

Nachteilig am aufgezeigten Stand der Technik ist, dass die Umrüstung der Vorrichtung für die unterschiedlichen Betriebsmodi umständlich und zeitintensiv ist, was zu hohen Stillstandzeiten der Vorrichtung führt.

Ausgehend hiervon ist es Aufgabe der Erfindung, eine Vorrichtung zur Bildung von Gebinden aus mehreren Verpackungseinheiten anzugeben, die eine erleichterte, zeitsparende Umrüstung für die verschiedenen Betriebsmodi ermöglicht.

Die Aufgabe wird durch eine Vorrichtung gemäß den Merkmalen des unabhängigen Patentanspruchs 1 gelöst. Ein Verfahren zum Bilden von Gebinden aus mehreren Verpackungseinheiten ist Gegenstand des nebengeordneten Patentanspruchs 14.

Gemäß einem ersten Aspekt bezieht sich die Erfindung auf eine Vorrichtung gemäß Anspruch 1 zur Bildung von Gebinden aus mehreren Verpackungseinheiten. Die Vorrichtung umfasst eine erste Transporteinrichtung, eine auf die erste Transporteinrichtung in Transportrichtung folgende zweite Transporteinrichtung und eine auf die zweite Transporteinrichtung in Transportrichtung folgende dritte Transporteinrichtung. Dabei ist eine aus einem einzigen Fördersegment bestehende, d.h. nicht aus mehreren hintereinander anzuordnenden Segmenten zusammensetzbare Austauschtransporteinrichtung vorgesehen, die zum Ersetzen der zweiten Transporteinrichtung zwischen die erste und dritte Transporteinrichtung einsetzbar ist. Dabei sind die Länge der Austauschtransporteinrichtung und/oder die Weite einer Lücke zwischen der ersten Transporteinrichtung und der dritten Transporteinrichtung durch eine translatorische Verschiebung zumindest einer Umlenkeinheit veränderbar.

Der wesentliche Vorteil der Vorrichtung besteht darin, dass durch die translatorische Verschiebung zumindest einer Umlenkeinheit der Austauschtransporteinrichtung und/oder der ersten und/oder dritten Transporteinrichtung die Einbringung der Austauschtransporteinrichtung wesentlich vereinfacht werden kann, da zumindest temporär die enge Einbausituation der Austauschtransporteinrichtung erweitert wird. Gemäß einem Ausführungsbeispiel kann insbesondere die erste und/oder die dritte Transporteinrichtung ein der mehrere Schubbleche umfassen, auf welchen die zu transportierenden Gebinde oder die das spätere Gebinde bildenden Verpackungseinheiten oder Gruppen aus Verpackungseinheiten mittels motorisch angetriebenen Schubstangen in Transportrichtung rutschend oder gleitend bewegt werden.

Gemäß einem Ausführungsbeispiel weist die Austauschtransporteinrichtung und/oder die erste Transporteinrichtung und/oder die dritte Transporteinrichtung ein umlaufendes Transportelement auf, das an zumindest zwei die Förderlänge dieser Transporteinrichtungen definierenden Umlenkeinheiten umläuft, wobei der in Transportrichtung gemessene Abstand der Umlenkeinheiten der Austauschtransporteinrichtung und/oder der ersten Transporteinrichtung und/oder der dritten Transporteinrichtung veränderbar ist. Die Förderlänge ist dabei die Länge der Transportstrecke, auf der die Verpackungseinheiten bzw. Gebinde durch die jeweilige Transporteinrichtung gefördert werden. Bei einem Bandförderer wird typischerweise jeweils eine Umlenkeinheit an einem freien Ende desselben angeordnet, um die Verpackungseinheiten bzw. Gebinde an die nächste Transporteinrichtung möglichst nahtlos und erschütterungsfrei übergeben zu können. Durch die translatorische Verschiebung dieser freiendseitig angeordneten Umlenkeinheiten können die Länge der Austauschtransporteinrichtung und/oder die Weite einer Lücke zwischen der ersten Transporteinrichtung und der dritten Transporteinrichtung in vorteilhafter Weise verändert werden, um die Umrüstung zu erleichtern bzw. die Umrüstungszeit zu verkürzen.

Gemäß einem Ausführungsbeispiel ist die Lage einer der Umlenkeinheiten relativ zu der zumindest einen weiteren Umlenkeinheit durch eine translatorische Verschiebung der Umlenkeinheit parallel zur Transportrichtung veränderbar. Insbesondere ist bei der Austauschtransporteinrichtung und/oder der ersten Transporteinrichtung und/oder der dritten Transporteinrichtung eine der zumindest zwei die Förderlänge definierenden Umlenkeinheiten parallel zur Transportrichtung verschiebbar. Dadurch lässt sich beispielsweise die in Förderrichtung gemessene Länge der Austauschtransporteinrichtung, der ersten Transporteinrichtung und/oder der dritten Transporteinrichtung verringern, so dass die Einbausituation durch eine Erweiterung der Lücke zwischen den ersten und dritten Transporteinrichtungen bzw. eine Verkleinerung der Länge der Austauschtransporteinrichtung verbessert wird.

Gemäß einem Ausführungsbeispiel ist bei der ersten Transporteinrichtung und/oder der dritten Transporteinrichtung eine benachbart zur Austauschtransporteinrichtung angeordnete Umlenkeinheit parallel zur Transportrichtung verschiebbar. Diese benachbart zur Austauschvorrichtung angeordneten Umlenkeinheiten dienen der Umlenkung des Transportelements in einem Übergangsbereich, in dem die Verpackungseinheiten bzw. Gebinde der Austauschtransporteinrichtung zugefördert werden (im Falle der ersten Transporteinrichtung) oder in dem die Verpackungseinheiten bzw. Gebinde von der Austauschtransporteinrichtung abgefördert werden (im Falle der zweiten Transporteinrichtung). Insbesondere kann die benachbart zur Austauschtransporteinrichtung angeordnete Umlenkeinheit der ersten Transporteinrichtung während des Umrüstvorgangs entgegen der Transportrichtung und die benachbart zur Austauschtransporteinrichtung angeordnete Umlenkeinheit der dritten Transporteinrichtung während des Umrüstvorgangs in Transportrichtung verschoben oder aus dem Transportweg mindestens teilweise verschwenkt werden. Nachfolgend soll alternativ zur translatorischen Verschiebung immer auch eine mindestens teilweises Verschwenken verstanden werden, es sei denn, dass dies technisch nicht möglich ist. Durch die translatorische Verschiebung der in den Übergangsbereichen vorgesehenen Umlenkeinheiten kann die Weite der Lücke zwischen der ersten und dritten Transporteinrichtung vergrößert werden.

Gemäß einem Ausführungsbeispiel sind Antriebe zur translatorischen Verschiebung der zumindest einen Umlenkeinheit vorgesehen. Diese Antriebe können insbesondere automatisierte Antriebe sein, beispielsweise elektrische, pneumatische oder hydraulische Antriebe. Alternativ kann die translatorische Verschiebung manuell erfolgen, beispielsweise durch eine manuell betätigte Verstellmechanik.

Gemäß einem Ausführungsbeispiel ist der Antrieb zur translatorischen Verschiebung der zumindest einen Umlenkeinheit der Austauschtransporteinrichtung an der Austauschtransporteinrichtung selbst oder stationär an einem Maschinengestell vorgesehen, so dass der Antrieb beim Einsetzen der Austauschtransporteinrichtung mit dieser zur Übertragung von Antriebskräften koppelbar ist. In anderen Worten ist in einer ersten Variante der Antrieb Bestandteil der Austauschtransporteinrichtung und wird zusammen mit dieser angehoben bzw. abgesenkt. In einer zweiten Variante ist der automatisierte, insbesondere motorische Antrieb kein Bestandteil der Austauschtransporteinrichtung, sondern die Austauschtransporteinrichtung wird erst beim Umrüsten auf den zweiten Betriebsmodus mit dem Antrieb gekoppelt, beispielsweise durch Ineinandergreifen von Zahnrädern oder anderweitiges Ankoppeln des Antriebs an eine an der Austauschtransporteinrichtung vorgesehene Verstellmechanik.

Gemäß einem Ausführungsbeispiel weist die Austauschtransporteinrichtung und/oder die erste Transporteinrichtung und/oder die dritte Transporteinrichtung Führungen auf, die zur Veränderung der Länge der Austauschtransporteinrichtung und/oder zur Veränderung der Weite der Lücke zwischen der ersten Transporteinrichtung und der dritten Transporteinrichtung durch eine translatorische Verschiebung einer Drehachse einer Umlenkeinheit, an der ein Transportelement der Austauschtransporteinrichtung und/oder der ersten Transporteinrichtung und/oder der dritten Transporteinrichtung umgelenkt wird, ausgebildet ist. Dabei können die Führungen beispielsweise dazu ausgebildet sein, eine translatorische Verschiebbarkeit einer die Drehachse der Umlenkeinheit definierenden Welle innerhalb einer nicht verschiebbaren Tragstruktur dieser Welle zu gewährleisten. Alternativ können die Führungen eine Verschiebbarkeit zumindest eines Teils der Tragstruktur ermöglichen, wobei die die Drehachse der Umlenkeinheit definierende Welle an der Tragstruktur nicht verschiebbar ist. Auch Kombinationen der vorgenannten Möglichkeiten sind denkbar.

Gemäß einem Ausführungsbeispiel weist die Austauschtransporteinrichtung und/oder die erste Transporteinrichtung und/oder die dritte Transporteinrichtung eine Spanneinrichtung zum Spannen eines umlaufenden Transportelements auf. Durch diese Spanneinrichtung kann das Transportelement, insbesondere ein Transportband auch bei der translatorischen Verschiebung der Umlenkeinheit auf Spannung gehalten werden, so dass beispielsweise ein unerwünschtes Verrutschen des Transportelements gegenüber der Umlenkeinheit vermieden werden kann.

Gemäß einem Ausführungsbeispiel ist eine Hebeeinrichtung zum Anheben und Absenken der Austauschtransporteinrichtung vorgesehen. Diese Hebeeinrichtung kann zum einen zur vertikalen Bewegung der Austauschtransporteinrichtung während des Umrüstvorgangs verwendet werden, zum anderen kann die Hebeeinrichtung auch zur Halterung und Lagerung der Austauschtransporteinrichtung oberhalb der Transportebene der Verpackungseinheiten bzw. Gebinde im ersten Betriebsmodus, in dem die Austauschtransporteinrichtung nicht zur Förderung der Verpackungseinheiten bzw. Gebinde verwendet wird, ausgebildet sein. Natürlich ist bei entsprechendem Raumangebot auch alternativ möglich, dass die Hebeeinrichtung auch zur Halterung und Lagerung der Austauschtransporteinrichtung unterhalb der Transportebene dient.

Gemäß einem Ausführungsbeispiel ist die Hebeeinrichtung derart ausgebildet, dass die Austauschtransporteinrichtung beim Anheben und Absenken in eine Schräglage positionierbar ist, bei der die Längsachse der Austauschtransporteinrichtung schräg zu einer horizontalen Ebene verläuft. Insbesondere kann die Hebeeinrichtung zum Positionieren der Austauschtransporteinrichtung in eine Schräglage, bei der die Längsachse der Austauschtransporteinrichtung einen Winkel von mindestens 30° mit einer horizontalen Ebene einschließt, ausgebildet sein. Durch das Schrägstellen der Austauschtransporteinrichtung kann ein freies Ende der Austauschtransporteinrichtung tiefer als das weitere freie Ende der Austauschtransporteinrichtung positioniert werden. Dadurch lässt sich die Austauschtransporteinrichtung leichter in die zwischen der ersten und dritten Transporteinrichtung bestehende Lücke einbringen.

Gemäß einem Ausführungsbeispiel ist die Vorrichtung dazu ausgebildet, die erste und/oder dritte Transporteinrichtung derart schrägzustellen, dass die durch die jeweilige Transporteinrichtung gebildete Transportebene in eine Schräglage positionierbar ist, bei der diese Transportebene schräg zu einer horizontalen Ebene verläuft. Insbesondere kann die Schrägstellung der ersten und/oder dritten Transporteinrichtung derart erfolgen, dass eine Umlenkeinheit, die benachbart zu dem Bauraum, in den die Austauschtransporteinrichtung einzubringen ist, liegt, angehoben bzw. abgesenkt wird. Dadurch wird das Einbringen der Austauschtransporteinrichtung in die zwischen der ersten und dritten Transporteinrichtung bestehende Lücke weiterhin erleichtert.

Gemäß der Erfindung ist die zweite Transporteinrichtung zum Einsetzen der Austauschtransporteinrichtung von einer ersten Position, in der ein Transport von Verpackungseinheiten erfolgt, in eine zweite, nichtaktive Position verlagerbar. Insbesondere lässt sich die zweite Transporteinrichtung seitlich, d.h. quer zur Transportrichtung verfahren bzw. verschieben, um einen freien Bauraum für die Austauschtransporteinrichtung zu schaffen.

Gemäß der Erfindung besteht die zweite Transporteinrichtung aus mehreren Transporteinrichtungsabschnitten, wobei die Transporteinrichtungsabschnitte zum Einnehmen der zweiten, nichtaktiven Position quer zur Transportrichtung in entgegengesetzte Richtungen verlagerbar sind. In anderen Worten besteht die zweite Transporteinrichtung aus mehreren Transporteinrichtungsabschnitten, die durch eine in Transportrichtung verlaufende Trennebene voneinander getrennt und in Bezug auf diese Trennebene in unterschiedlichen Richtungen verschiebbar sind. Dadurch lassen sich beispielsweise ein erster Transporteinrichtungsabschnitt zu einer ersten Seite und ein zweiter Transporteinrichtungsabschnitt zu einer zweiten Seite in eine nichtaktive Position verschieben.

Gemäß einem weiteren Aspekt betrifft die Erfindung ein Verfahren gemäß Anspruch 14 zum Umrüsten einer Vorrichtung umfassend eine erste Transporteinrichtung, eine auf die erste Transporteinrichtung in Transportrichtung folgende zweite Transporteinrichtung und eine auf die zweite Transporteinrichtung in Transportrichtung folgende dritte Transporteinrichtung, wobei eine aus einem einzigen Fördersegment bestehende Austauschtransporteinrichtung vorgesehen ist, die beim Umrüsten zum Ersetzen der zweiten Transporteinrichtung zwischen die erste und dritte Transporteinrichtung eingesetzt wird. Dabei kann die Länge der Austauschtransporteinrichtung und/oder die Weite einer Lücke zwischen der ersten Transporteinrichtung und der dritten Transporteinrichtung durch eine translatorische Verschiebung zumindest einer Umlenkeinheit verändert werden.

Unter "Verpackungseinheit" im Sinne der vorliegenden Erfindung werden jegliche Verpackungen verstanden, die zur Aufnahme von Gütern geeignet sind, insbesondere Behälter wie Dosen, Flaschen, Pouches etc.

Unter "Gebinde" im Sinne der vorliegenden Erfindung wird eine Gruppe von Verpackungseinheiten verstanden, die zu einer handhabbaren Einheit zusammengefasst und durch Verbindungsmittel, beispielsweise eine die Gruppe von Verpackungseinheiten umhüllende Folie miteinander verbunden sind.

Unter "Transportelement" im Sinne der vorliegenden Erfindung werden Mittel verstanden, auf denen Verpackungseinheiten bzw. Gebinde förderbar sind, insbesondere Transportbänder, Transportketten, aus mehreren gelenkig miteinander verbundenen Gliedern gebildete Gliederbänder bzw. Gliedergurte etc.

Unter "Umlenkeinheit" im Sinne der vorliegenden Erfindung werden sämtliche Mittel verstanden, mittels denen ein Transportelement umgelenkt und damit umlaufend antreibbar ist. Eine Umlenkeinheit kann insbesondere als Umlenkrolle ausgebildet sein.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft und grob schematisch eine erfindungsgemäße Vorrichtung in einem ersten Betriebsmodus in einer Seitendarstellung;
- Fig. 2: beispielhaft und grob schematisch eine erfindungsgemäße Vorrichtung in einem ersten Betriebsmodus in einer Seitendarstellung, bei der die Transportrichtung senkrecht zur Bildebene verläuft;
- Fig. 3: beispielhaft und grob schematisch eine erfindungsgemäße Vorrichtung bei der Umrüstung von einem ersten in einen zweiten Betriebsmodus in einer Seitendarstellung, bei der die Transportrichtung senkrecht zur Bildebene verläuft;
- Fig. 4: beispielhaft und grob schematisch eine erfindungsgemäße Vorrichtung bei der Umrüstung von einem ersten in einen zweiten Betriebsmodus in einer weiteren Seitendarstellung;
- Fig. 5: beispielhaft und grob schematisch eine erfindungsgemäße Vorrichtung bei der Umrüstung von einem ersten in einen zweiten Betriebsmodus mit einer schräg gestellten Austauschtransporteinrichtung in einer Seitendarstellung; und
- Fig. 6: beispielhaft und grob schematisch eine erfindungsgemäße Vorrichtung bei der Umrüstung von einem ersten in einen zweiten Betriebsmodus mit einer schräg gestellten ersten Transporteinrichtung in einer Seitendarstellung.

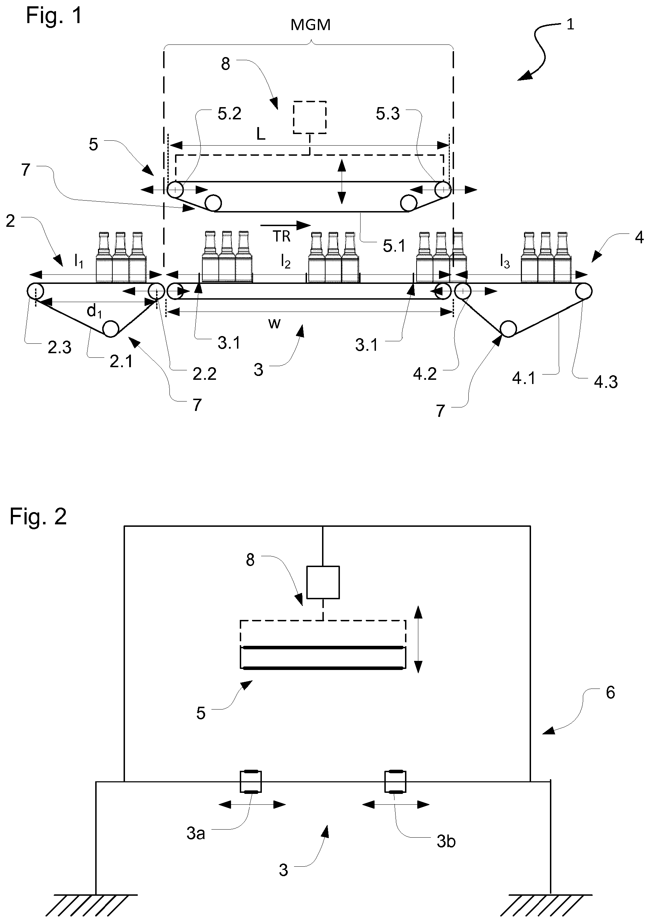

In Figur 1 ist mit dem Bezugszeichen 1 beispielhaft und schematisch eine Vorrichtung zum Bilden von Gebinden aus mehreren Verpackungseinheiten gezeigt. Die Vorrichtung eines umfasst in Transportrichtung TR aufeinanderfolgend eine erste Transporteinrichtung 2, eine zweite Transporteinrichtung 3 und eine dritte Transporteinrichtung 4. Die erste Transporteinrichtung 2 kann insbesondere eine Fördereinrichtung darstellen, mittels der Gruppen von Verpackungseinheiten der zweiten Transporteinrichtung 3 zugeführt werden. Die dritte Transporteinrichtung 4 kann der Abführung der Gruppen von Verpackungseinheiten von der zweiten Transporteinrichtungen 3 dienen, beispielsweise zu einem Schrumpftunnel hin. Die zweite Transporteinrichtung 3 dient der Förderung der Gruppen von Verpackungseinheiten in einem Maschinengrundmodul MGM, an dem eine nachfolgend noch näher beschriebene Bearbeitungsschritte an den Gruppen von Verpackungseinheiten vollzogen werden.

Ferner weist die Vorrichtung eine Austauschtransporteinrichtung 5 auf, die anstelle der zweiten Transporteinrichtung 3 zwischen die erste und dritte Transporteinrichtung 2, 4 positionierbar ist. Dadurch lässt sich die Vorrichtung 1 zur Herstellung von unterschiedlichen Gebindetypen beispielsweise in einen ersten und einen zweiten Betriebsmodus modifizieren.

Die zweite Transporteinrichtung 3, die im ersten Betriebsmodus Verwendung findet, kann insbesondere dazu ausgebildet sein, Gruppen von Verpackungseinheiten zu fördern, die unterseitig auf einem Kartonbogen aufstehen. Die zweite Transporteinrichtung 3 kann hierbei ein Paar von Transportketten aufweisen, die beabstandet zueinander angeordnet und umlaufend antreibbar sind. Auf diesen Transportketten steht die auf dem Kartonbogen angeordnete Gruppe von Verpackungseinheiten auf und wird durch die umlaufenden Transportketten in Transportrichtung TR gefördert. Die zweite Transporteinrichtung 3 kann vorzugsweise Falteinrichtungen 3.1 aufweisen, mittels denen Randabschnitte des Kartonbogens gefaltt werden, so dass diese von der Transportebene der zweiten Transporteinrichtung 3 nach oben abstehen. Die Falteinrichtungen 3.1 können beispielsweise durch nach oben abstehende Faltwerkzeuge gebildet werden.

Um die Vorrichtung 1 zur Herstellung eines weiteren Gebindetyps, und zwar insbesondere eines Gebindetyps, der keine bodenseitig angeordneten Kantonbögen aufweist, anpassen zu können, d.h. den zweiten Betriebsmodus, kann die Förderung der Gruppen von Verpackungseinheiten anstelle der zweiten Transporteinrichtung 3 durch die Austauschtransporteinrichtung 5 erfolgen. Die Austauschtransporteinrichtung 5 verwendet als Transportelement 5.1 beispielsweise ein Transportband oder mehrere, im Bezug auf die Transportrichtung (TR) parallel zueinander verlaufende Transportbänder. Die Austauschtransporteinrichtung 5 kann dabei anstelle der zweiten Transporteinrichtung 3 in den Transportweg eingesetzt werden und damit die Förderung der Gruppen von Verpackungseinheiten zwischen der ersten Transporteinrichtung 2 und der dritten Transporteinrichtung 4 übernehmen.

Zum Einbringen der Austauschtransporteinrichtung 5 in einen Bauraum zwischen die erste Transporteinrichtung 2 und die dritte Transporteinrichtung 4 kann eine Hebeeinrichtung 8 vorgesehen sein. Die Hebeeinrichtung 8 kann beispielsweise als Kran, als Seilzug, als Kettenzug o.ä. ausgebildet sein. Mittels der Hebeeinrichtung 8 kann die Austauschtransporteinrichtung 5 in vertikaler Richtung, wie durch den Doppelpfeil in Figur 1 angedeutet, abgesenkt bzw. angehoben werden.

Um das Einbringen der Austauschtransporteinrichtung 5 zwischen die erste Transporteinrichtung 2 und die dritte Transporteinrichtung 4 zu erleichtern, kann die in Transportrichtung TR verlaufende Länge L der Austauschtransporteinrichtung 5 und/oder die Weite w der zwischen der ersten und dritten Transporteinrichtung 2, 4 bestehende Lücke verändert werden. So kann beispielsweise der Abstand zwischen der ersten Transporteinrichtung 2 und der dritten Transporteinrichtung 4 und damit die Weite w durch ein Verkürzen der Förderlänge l₁, l₃ zumindest einer dieser Transporteinrichtungen 2, 4 vergrößert werden, um die Austauschtransporteinrichtung 5 leichter einsetzen zu können. Alternativ ist es möglich, dass die Länge L bzw. die Förderlänge l₂ der Austauschtransporteinrichtung 5 selbst verkleinert wird, und zwar wiederum mit dem Ziel, das Einsetzen dieser Austauschtransporteinrichtung 5 zu vereinfachen.

Wie in Figur 1 gezeigt, läuft das Transportelement 2.1, das beispielsweise durch ein Transportband gebildet ist, im gezeigten Ausführungsbeispiel an einer ersten und zweiten Umlenkeinheit 2.2, 2.3 und einer Spanneinrichtung 7 um. Um die Lücke zwischen der ersten und dritten Transporteinrichtung 2, 4 vergrößern zu können, wird die Förderlänge l₁, d.h. der Abstand zwischen der ersten und zweiten Umlenkeinheit 2.2, 2.3 verringert. Dies erfolgt vorzugsweise durch eine translatorische Verschiebung der Drehachse der ersten Umlenkeinheit 2.2 (die der zweiten Transporteinrichtung 3 bzw. der Austauschtransporteinrichtung 5 benachbarte Umlenkeinheit) parallel zur Transportrichtung TR, und zwar auf die zweite Umlenkeinheit 2.3 zu. Hierzu kann eine die Drehachse der ersten Umlenkeinheit 2.2 bildende Welle in einer in Transportrichtung TR verlaufenden Führung verschiebbar vorgesehen sein. Die translatorische Verschiebung der ersten Umlenkeinheit 2.2 kann manuell oder durch einen Antrieb (beispielsweise elektrisch, hydraulisch, pneumatisch etc.) erfolgen.

In analoger Weise läuft das Transportelement 4.1, das beispielsweise durch ein Transportband gebildet ist, im gezeigten Ausführungsbeispiel an einer ersten und zweiten Umlenkeinheit 4.2, 4.3 und einer Spanneinrichtung 7 um. Um die Lücke zwischen der ersten und dritten Transporteinrichtung 2, 4 alternativ oder zusätzlich zu der vorbeschriebenen Möglichkeit der Veränderbarkeit der Förderlänge l₁ der ersten Transporteinrichtung 2 vergrößern zu können, wird die Förderlänge l₃, d.h. der Abstand zwischen der ersten und zweiten Umlenkeinheit 4.2, 4.3 verringert. Dies erfolgt vorzugsweise durch eine translatorische Verschiebung der Drehachse der ersten Umlenkeinheit 4.2 (die der zweiten Transporteinrichtung 3 bzw. der Austauschtransporteinrichtung 5 benachbarte Umlenkeinheit) parallel zur Transportrichtung TR, und zwar auf die zweite Umlenkeinheit 4.3 zu. Hierzu kann eine die Drehachse der ersten Umlenkeinheit 4.2 bildende Welle in einer in Transportrichtung TR verlaufenden Führung verschiebbar vorgesehen sein. Die translatorische Verschiebung der ersten Umlenkeinheit 4.2 kann manuell oder durch einen Antrieb (beispielsweise elektrisch, hydraulisch, pneumatisch etc.) erfolgen.

Alternativ oder zusätzlich zu der Veränderung der Förderlängen l₁, l₃ der ersten und/oder dritten Transporteinrichtung 2, 4 kann auch die Austauschtransporteinrichtung 5 in ihrer Länge L veränderbar sein, d.h. eine variable Förderlänge l₂ aufweisen. Hierzu können eine oder beide der die Förderlänge l₂ definierenden Umlenkeinheiten 5.2, 5.3 translatorisch parallel zur Transportrichtung TR verschoben werden. Die Umlenkeinheiten 5.2, 5.3 bilden insbesondere die äußeren Umlenkeinheiten der Austauschtransporteinrichtung 5, d.h. diejenigen Umlenkeinheiten, die nach dem Einbringen der Austauschtransporteinrichtung 5 zwischen die erste und dritte Transporteinrichtung 2, 4 benachbart zur ersten bzw. dritten Transporteinrichtung 2, 4 angeordnet sind. Hierzu können die Drehachse der Umlenkeinheiten 5.2, 5.3 bildende Wellen in einer in Transportrichtung TR verlaufenden Führung verschiebbar vorgesehen sein oder die die Umlenkeinheiten 5.2, 5.3 lagernde Tragstruktur ist längenverstellbar ausgebildet. Die translatorische Verschiebung der Umlenkeinheiten 5.2, 5.3 kann manuell oder durch einen Antrieb (beispielsweise elektrisch, hydraulisch, pneumatisch etc.) erfolgen.

Nachfolgend wird das Einsetzen der Austauschtransporteinrichtung 5 zur Umrüstung der Vorrichtung 1 vom ersten Betriebsmodus in den zweiten Betriebsmodus beschrieben. In Figuren 1 und 2 ist die Konfiguration der Vorrichtung 1 im ersten Betriebsmodus gezeigt, bei dem die Förderung der Verpackungseinheiten durch die zweite Transporteinheit 3 erfolgt. Die Austauschtransporteinrichtung 5 ist im ersten Betriebsmodus oberhalb der zweiten Transporteinheit 3 gelagert, und zwar angehoben durch die Hebeeinrichtung 8 und ggf. gesichert durch Sicherungsmittel bzw. abgestützt an Stützmitteln.

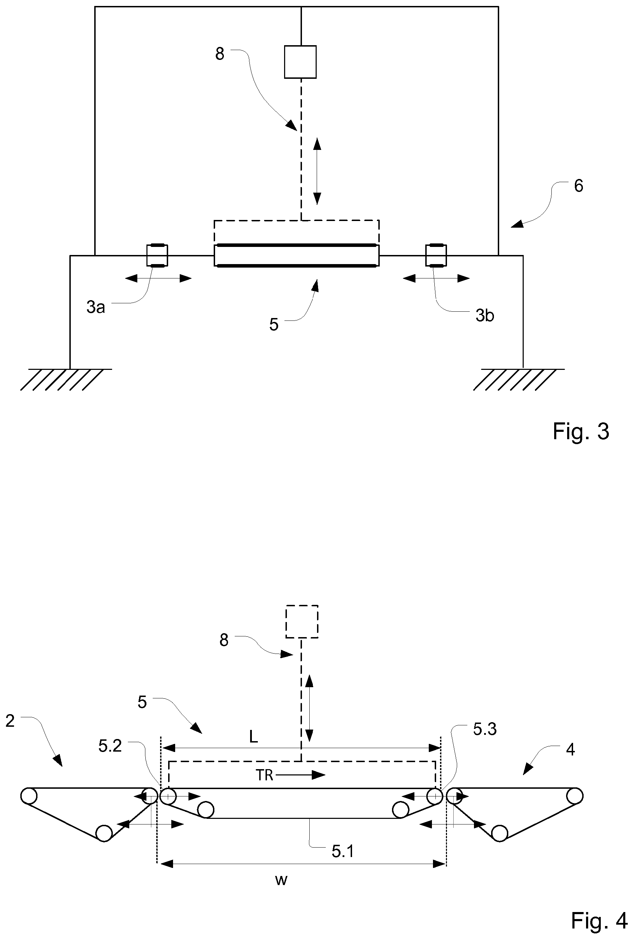

Zum Umrüsten der Vorrichtung von dem ersten Betriebsmodus in den zweiten Betriebsmodus wird zunächst die zweite Transporteinheit 3 verlagert, um die Austauschtransporteinrichtung 5 anstelle derer einsetzen zu können. Die zweite Transporteinheit 3 besteht aus mehreren Transporteinrichtungsabschnitten, insbesondere einem ersten und einem zweiten Transporteinrichtungsabschnitt 3a, 3b. Die Transporteinrichtungsabschnitte 3a, 3b weisen beispielsweise jeweils eine Transportkette auf. Die Transporteinrichtungsabschnitte 3a, 3b sind vorzugsweise in Transportrichtung TR gesehen durch eine Trennebene voneinander getrennt. Diese Trennebene ist insbesondere eine vertikale Ebene und verläuft parallel zur Transportrichtung TR. Die Transporteinrichtungsabschnitte 3a, 3b können insbesondere derart ausgebildet sein, dass diese, wie in Figur 2 durch die Doppelpfeile angedeutet, seitlich auseinandergefahren werden können, d.h. der quer zur Transportrichtung TR gemessene Abstand der Transporteinrichtungsabschnitte 3a, 3b kann verändert werden. Dadurch können die Transporteinrichtungsabschnitte 3a, 3b, wie in Figur 3 gezeigt, in eine außenliegende Position (nachfolgend Inaktiv-Position genannt) gebracht werden, so dass zwischen diesen Transporteinrichtungsabschnitten 3a, 3b die Austauschtransporteinrichtung 5 eingebracht werden kann. Dieses Einbringen erfolgt durch ein Absenken der Austauschtransporteinrichtung 5 mittels der Hebeeinrichtung 8 (s. Figuren 3 und 4).

Um dieses Einbringen der Austauschtransporteinrichtung 5 zu ermöglichen bzw. zu erleichtern, kann die zuvor beschriebene Längenänderung der Austauschtransporteinrichtung 5 bzw. die Vergrößerung der Weite w der Lücke vorgenommen werden. Nach dem Einbringen der Austauschtransporteinrichtung 5 kann diese Längenänderung bzw. Vergrößerung der Weite w der Lücke zumindest teilweise rückgängig gemacht werden, um möglichst kleine Lücken zwischen der ersten Transporteinrichtung 2 und der Austauschtransporteinrichtung 5 bzw. zwischen der Austauschtransporteinrichtung 5 und der dritten Transporteinrichtung 4 zu erhalten. D.h. die Länge der Austauschtransporteinrichtung 5 kann zumindest teilweise vergrößert werden oder in ihre Ursprungslänge verstellt werden bzw. die Weite w der Lücke kann zumindest teilweise verkleinert bzw. auf ihre Ursprungsgröße reduziert werden.

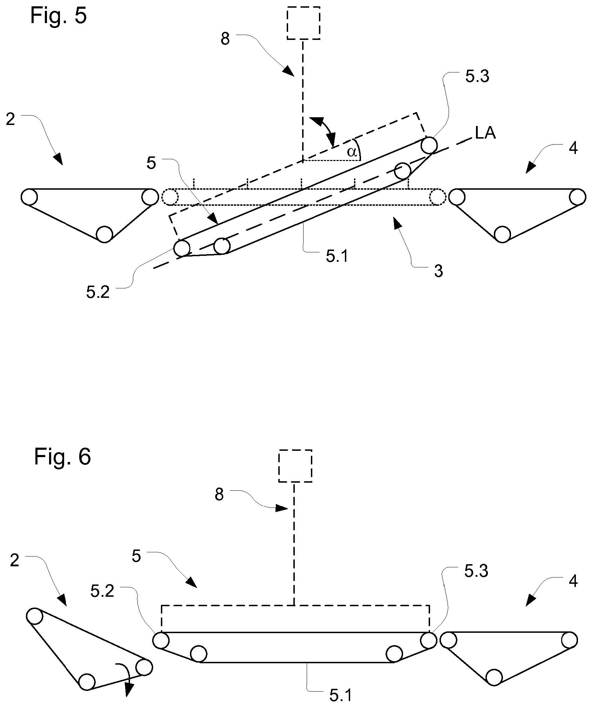

Um das Einbringen der Austauschtransporteinrichtung 5 weiterhin zu vereinfachen, kann die Hebeeinrichtung 8 dazu ausgebildet sein, die Austauschtransporteinrichtung 5, wie in Figur 5 gezeigt, zumindest zeitweise in einer Schräglage zu positionieren, d.h. in eine Schrägposition zu bringen, bei der die Längsachse LA der Austauschtransporteinrichtung 5 nicht horizontal ausgerichtet ist sondern mit einer Horizontalen einen spitzen Winkel α einschließt. Diese Schräglage kann insbesondere während des Absenkens der Austauschtransporteinrichtung 5 eingenommen werden, um durch das Schrägstellen zunächst ein unteres freies Ende der Austauschtransporteinrichtung 5 einbringen zu können, beispielsweise unterhalb eine Quertraverse eines Maschinengestells und durch ein anschließendes Rückstellen in eine horizontale Ebene und ein weiteres Absenken das Einsetzen der Austauschtransporteinrichtung 5 weiterzuführen. Beim Anheben kann das Schrägstellen der Austauschtransporteinrichtung 5, um die Austauschtransporteinrichtung 5 in vereinfachter Weise in die obere Position bringen zu können.

Alternativ oder zusätzlich kann zumindest eine der Transporteinrichtungen 2, 4 in eine Schräglage positionierbar sein, wie dies beispielhaft in Figur 6 dargestellt ist. Insbesondere kann beim Schrägstellen die erste Umlenkeinheit 2.2 der ersten Transporteinrichtung 2 und/oder die erste Umlenkeinheit 4.2 der dritten Transporteinrichtung 4 nach unten oder nach oben geschwenkt werden. Dadurch kann die Lücke zwischen den Transporteinrichtungen 2, 4 weiterhin vergrößert werden und das Einsetzen der Austauschtransporteinrichtung 5 vereinfacht werden.

Die Erfindung wurde voranstehend an Ausführungsbeispielen beschrieben. Es versteht sich, dass eine Vielzahl von Änderungen oder Abwandlungen möglich sind, ohne dass dadurch der der Erfindung zugrundeliegende Erfindungsgedanke verlassen wird.

### Bezugszeichenliste

- 1: Vorrichtung
- 2: erste Transporteinrichtung
- 2.1: Transportelement
- 2.2: erste Umlenkeinheit
- 2.3: zweite Umlenkeinheit
- 3: zweite Transporteinrichtung
- 3a: erster Transporteinrichtungsabschnitt
- 3b: zweiter Transporteinrichtungsabschnitt
- 3.1: Falteinrichtung
- 4: dritte Transporteinrichtung
- 4.1: Transportelement
- 4.2: erste Umlenkeinheit
- 4.3: zweite Umlenkeinheit
- 5: Austauschtransporteinrichtung
- 5.1: Transportelement
- 5.2: erste Umlenkeinheit
- 5.3: zweite Umlenkeinheit
- 6: Maschinengestell
- 7: Spanneinrichtung
- 8: Hebeeinrichtung

- d₁, d₂, d₃: Abstand
- l₁, l₂, l₃: Förderlänge
- L: Länge
- LA: Längsachse
- TR: Transportrichtung
- w: Weite

## Patentansprüche

1. Vorrichtung zur Bildung von Gebinden aus mehreren Verpackungseinheiten umfassend eine erste Transporteinrichtung (2), eine auf die erste Transporteinrichtung (2) in Transportrichtung (TR) folgende zweite Transporteinrichtung (3) und eine auf die zweite Transporteinrichtung (3) in Transportrichtung folgende dritte Transporteinrichtung (4), wobei eine Austauschtransporteinrichtung (5) vorgesehen ist, die zum Ersetzen der zweiten Transporteinrichtung (3) zwischen die erste und dritte Transporteinrichtung (2, 4) einsetzbar ist, wobei die Länge (L) der Austauschtransporteinrichtung (5) und/oder die Weite (w) einer Lücke zwischen der ersten Transporteinrichtung (2) und der dritten Transporteinrichtung (4) durch eine translatorische Verschiebung oder ein Verschwenken zumindest einer Umlenkeinheit (2.2, 4.2, 5.2, 5.3) veränderbar sind, wobei die zweite Transporteinrichtung (3) zum Einsetzen der Austauschtransporteinrichtung (5) von einer ersten Position, in der ein Transport von Verpackungseinheiten erfolgt, in eine zweite, nichtaktive Position verlagerbar ist, und wobei die zweite Transporteinrichtung (3) aus mehreren Transporteinrichtungsabschnitten (3a, 3b) besteht und dass die Transporteinrichtungsabschnitte (3a, 3b) zum Einnehmen der zweiten, nichtaktiven Position quer zur Transportrichtung (TR) in entgegengesetzte Richtungen verlagerbar sind,
**dadurch gekennzeichnet , dass** die Austauschtransporteinrichtung (14,15) aus einem einzigen Fördersegment besteht.

2. Vorrichtung nach Anspruch 1, **dadurch gekennzeichnet, dass** die Austauschtransporteinrichtung (5) und/oder die erste Transporteinrichtung (2) und/oder die dritte Transporteinrichtung (4) ein umlaufendes Transportelement (2.1, 4.1, 5.1) aufweist, das an zumindest zwei die Förderlänge (l₁, l₂, l₃) dieser Transporteinrichtungen (2, 4, 5) definierenden Umlenkeinheiten (2.2, 2.3, 4.2, 4.3, 5.2, 5.3) umläuft, wobei der in Transportrichtung (TR) gemessene Abstand (d₁, d₂, d₃) der Umlenkeinheiten (2.2, 2.3, 4.2, 4.3, 5.2, 5.3) der Austauschtransporteinrichtung (5) und/oder der ersten Transporteinrichtung (2) und/oder der dritten Transporteinrichtung (4) veränderbar ist.

3. Vorrichtung nach Anspruch 2, **dadurch gekennzeichnet, dass** die Lage einer der Umlenkeinheiten (2.2, 4.2, 5.2,) relativ zu der zumindest einen weiteren Umlenkeinheit (2.3, 4.3, 5.3) durch eine translatorische Verschiebung oder ein Verschwenken der Umlenkeinheit (2.2, 4.2, 5.2, 5.3) parallel zur Transportrichtung (TR) veränderbar ist.

4. Vorrichtung nach Anspruch 2 oder 3, **dadurch gekennzeichnet, dass** bei der Austauschtransporteinrichtung (5) und/oder der ersten Transporteinrichtung (2) und/oder der dritten Transporteinrichtung (4) eine der zumindest zwei die Förderlänge (l₁, l₂, l₃) definierenden Umlenkeinheiten (2.2, 4.2, 5.2, 5.3) parallel zur Transportrichtung (TR) verschiebbar ist.

5. Vorrichtung nach Anspruch 4, **dadurch gekennzeichnet, dass** bei der ersten Transporteinrichtung (2) und/oder der dritten Transporteinrichtung (4) eine benachbart zur Austauschtransporteinrichtung (5) angeordnete Umlenkeinheit (2.2, 4.2) parallel zur Transportrichtung (TR) verschiebbar ist.

6. Vorrichtung nach einem der vorhergehenden Ansprüche, **dadurch gekennzeichnet, dass** Antriebe zur translatorischen Verschiebung oder zum mindestens teilweisen Verschwenken einer Umlenkeinheit (2.2, 4.2, 5.2, 5.3) vorgesehen sind.

7. Vorrichtung nach Anspruch 6, **dadurch gekennzeichnet, dass** der Antrieb der Austauschtransporteinrichtung (5) an der Austauschtransporteinrichtung (5) selbst oder stationär an einem Maschinengestell (6) vorgesehen ist, so dass der Antrieb beim Einsetzen der Austauschtransporteinrichtung (5) mit dieser zur Übertragung von Antriebskräften koppelbar ist.

8. Vorrichtung nach einem der vorhergehenden Ansprüche, **dadurch gekennzeichnet, dass** die Austauschtransporteinrichtung (5) und/oder die erste Transporteinrichtung (2) und/oder die dritte Transporteinrichtung (4) Führungen aufweist, die zur Veränderung der Länge (L) der Austauschtransporteinrichtung (5) und/oder zur Veränderung der Weite (w) der Lücke zwischen der ersten Transporteinrichtung (2) und/oder der dritten Transporteinrichtung (4) durch eine translatorische Verschiebung oder zum mindestens teilweisen Verschwenken einer Drehachse einer Umlenkeinheit (2.2, 4.2, 5.2, 5.3), an der ein Transportelement (2.1, 4.1, 5.1) der Austauschtransporteinrichtung (5) und/oder der ersten Transporteinrichtung (2) und/oder der dritten Transporteinrichtung (3) umgelenkt wird, ausgebildet ist.

9. Vorrichtung nach einem der vorhergehenden Ansprüche, **dadurch gekennzeichnet, dass** die Austauschtransporteinrichtung (5) und/oder die erste Transporteinrichtung (2) und/oder die dritte Transporteinrichtung (4) eine Spanneinrichtung (7) zum Spannen eines umlaufenden Transportelements (2.1, 4.1, 5.1) aufweist.

10. Vorrichtung nach einem der vorhergehenden Ansprüche, **dadurch gekennzeichnet, dass** eine Hebeeinrichtung (8) zum Anheben und Absenken der Austauschtransporteinrichtung (5) vorgesehen ist.

11. Vorrichtung nach Anspruch 10, **dadurch gekennzeichnet, dass** die Hebeeinrichtung (8) derart ausgebildet ist, dass die Austauschtransporteinrichtung (5) beim Anheben und Absenken in eine Schräglage positionierbar ist, bei der die Längsachse (LA) der Austauschtransporteinrichtung (5) schräg zu einer horizontalen Ebene verläuft.

12. Vorrichtung nach Anspruch 11, **dadurch gekennzeichnet, dass** die Hebeeinrichtung (8) zum Positionieren der Austauschtransporteinrichtung (5) in eine Schräglage, bei der die Längsachse (LA) der Austauschtransporteinrichtung (5) einen Winkel von mindestens 30° mit einer horizontalen Ebene einschließt, ausgebildet ist.

13. Vorrichtung nach einem der vorhergehenden Ansprüche, **dadurch gekennzeichnet, dass** die erste und/oder die dritte Transporteinrichtung (2, 4) ein der mehrere Schubbleche umfassen, auf welchen zu transportierende Gebinde oder die das spätere Gebinde bildenden Verpackungseinheiten oder Gruppen aus Verpackungseinheiten mittels motorisch angetriebenen Schubelementen in Transportrichtung (TR) rutschend oder gleitend bewegbar sind.

14. Verfahren zum Umrüsten einer Vorrichtung (1) gemäß einem der vorangehenden Ansprüche, umfassend eine erste Transporteinrichtung (2), eine auf die erste Transporteinrichtung (2) in Transportrichtung (TR) folgende zweite Transporteinrichtung (3) und eine auf die zweite Transporteinrichtung (3) in Transportrichtung (TR) folgende dritte Transporteinrichtung (4), wobei eine aus einem einzigen Fördersegment bestehende Austauschtransporteinrichtung (5) vorgesehen ist, die beim Umrüsten zum Ersetzen der zweiten Transporteinrichtung (3) zwischen die erste und dritte Transporteinrichtung (2, 4) eingesetzt wird, **dadurch gekennzeichnet, dass** die Länge (L) der Austauschtransporteinrichtung (5) und/oder die Weite (w) einer Lücke zwischen der ersten Transporteinrichtung (2) und der dritten Transporteinrichtung (4) durch eine translatorische Verschiebung oder mindestens ein teilweises Verschwenken zumindest einer Umlenkeinheit (2.2, 4.2, 5.2, 5.3) verändert werden.

15. Verfahren nach Anspruch 14, **dadurch gekennzeichnet, dass** die erste und/oder die dritte Transporteinrichtung (2, 4) ein der mehrere Schubbleche umfassen, auf welchen zu transportierende Gebinde oder die das spätere Gebinde bildenden Verpackungseinheiten oder Gruppen aus Verpackungseinheiten mittels motorisch angetriebenen Schubelementen in Transportrichtung (TR) rutschend oder gleitend bewegt werden.

## Claims

1. An apparatus for forming packs from a plurality of packaging units, comprising a first transport device (2), a second transport device (3) following the first transport device (2) in the transport direction (TR), and a third transport device (4) following the second transport device (3) in the transport direction, wherein a replacement transport device (5) is provided, which can be inserted between the first and third transport devices (2, 4) to replace the second transport device (3), wherein the length (L) of the replacement transport device (5) and/or the width (w) of a gap between the first transport device (2) and the third transport device (4) can be modified by a translational displacement or a pivoting of at least one deflection unit (2.2, 4.2, 5.2, 5.3), the second transport device (3) being displaceable from a first position, in which packaging units are transported, into a second, inactive position for inserting the replacement transport device (5), and the second transport device (3) comprising a plurality of transport device sections (3a, 3b), and the transport device sections (3a, 3b) being displaceable in opposite directions transversely to the transport direction (TR) in order to assume the second, non-active position, **characterised in that** the replacement transport device (14, 15) consists of a single conveying segment.

2. The apparatus according to claim 1, **characterised in that** one or more of the replacement transport device (5) and the first transport device (2) and the third transport device (4) has/have a circulating transport element (2.1, 4.1, 5.1) that is guided around at least two deflection units (2.2, 2.3, 4.2, 4.3, 5.2, 5.3) defining the conveying length (h, l2, l3) of these transport devices (2, 4, 5), and the distance (di, d2, ds), measured in the transport direction (TR), between the deflection units (2.2, 2.3, 4.2, 4.3, 5.2, 5.3) of the deflection units (2.2, 2.3, 4.2, 4.3, 5.2, 5.3) of one or more of the replacement transport device (5) and the first transport device (2) and the third transport device (4) can be varied.

3. The apparatus according to claim 2, **characterised in that** the position of one of the deflecting units (2.2, 4.2, 5.2) relative to the at least one further deflecting unit (2.3, 4.3, 5.3) can be modified by a translatory displacement or pivoting of the deflecting unit (2.2, 4.2, 5.2, 5.3) parallel to the transport direction (TR).

4. The apparatus according to claim 2 or 3, **characterised in that** on one or more of the replacement transport device (5) and the first transport device (2) and the third transport device (4), one of the at least two deflection units (2.2, 4.2, 5.2, 5.3) defining the conveying length (h, l2, l3) is displaceable parallel to the transport direction (TR).

5. The apparatus according to claim 4, **characterised in that** on the first transport device (2) and/or the third transport device (4), a deflection unit (2.2, 4.2) located adjacent to the replacement transport device (5) can be displaced parallel to the transport direction (TR).

6. The apparatus according to any one of the preceding claims, **characterised in that** drives are provided for a translational displacement or for an at least partial pivoting of a deflecting unit (2.2, 4.2, 5.2, 5.3).

7. The apparatus according to claim 6, **characterised in that** the drive of the replacement transport device (5) is provided on the replacement transport device (5) itself or is stationary on a machine frame (6), so that the drive can be coupled to the replacement transport device (5) when it is inserted, in order to transmit drive forces.

8. The apparatus according to any one of the preceding claims, **characterised in that** one or more of the replacement transport device (5) and the first transport device (2) and the third transport device (4) has guides that are designed for modifying the length (L) of the replacement transport device (5) and/or for modifying the width (w) of the gap between the first transport means (2) and/or the third transport means (4) by a translatory displacement or for at least partially pivoting an axis of rotation of a deflection unit (2.2, 4.2, 5.2, 5.3), at which a transport element (2.1, 4.1, 5.1) of one or more of the replacement transport device (5) and the first transport device (2) and the third transport device (3) is deflected.

9. The apparatus according to any one of the preceding claims, **characterised in that** one or more of the replacement transport device (5) and the first transport device (2) and the third transport device (4) has/have a tensioning device (7) for tensioning a circulating transport element (2.1, 4.1, 5.1).

10. The apparatus according to any one of the preceding claims, **characterised in that** a lifting device (8) is provided for raising and lowering the replacement transport device (5).

11. The apparatus according to claim 10, **characterised in that** the lifting device (8) is designed in such a way that the replacement transport device (5) can be positioned, when being raised and lowered, in an inclined position in which the longitudinal axis (LA) of the replacement transport device (5) extends obliquely to a horizontal plane.

12. The apparatus according to claim 11, **characterised in that** the lifting device (8) is designed to position the replacement transport device (5) in an inclined position, in which the longitudinal axis (LA) of the replacement transport device (5) forms an angle of at least 30° with a horizontal plane.

13. The apparatus according to any one of the preceding claims, **characterised in that** the first and/or the third transport means (2, 4) comprise one of the several push plates on which the packs to be transported or the packaging units forming the subsequent pack or groups of packaging units are movable in a slipping or sliding manner in the transport direction (TR) by means of motor-driven pushing elements.

14. A method for converting the apparatus (1) according to any one of the preceding claims, comprising a first transport device (2), a second transport device (3) following the first transport device (2) in the transport direction (TR) and a third transport device (4) following the second transport device (3) in the transport direction (TR), wherein a replacement transport device (5) is provided which consists of a single conveyor segment and which is inserted between the first and third transport devices (2, 4) in order to replace the second transport device (3) during the conversion, **characterised in that** the length (L) of the replacement transport device (5) and/or the width (w) of a gap between the first transport device (2) and the third transport device (4) is/are modified by a translatory displacement or at least a partial pivoting of at least one deflection unit (2.2, 4.2, 5.2, 5.3).

15. The method according to claim 14, **characterised in that** the first and/or the third transporting means (2, 4) comprise(s) one of the several push plates, on which the packs to be transported or the packaging units forming the subsequent pack or groups of packaging units are moved in a slipping or sliding manner in the transporting direction (TR) by means of motor-driven pushing elements.

## Revendications

1. Dispositif de formation de lots à partir de plusieurs unités d'emballage comprenant un premier système de transport (2), un deuxième système de transport (3) suivant le premier système de transport (2) dans le sens de transport (TR) et un troisième système de transport (4) suivant le deuxième système de transport (3) dans le sens de transport, dans lequel un système de transport d'échange (5) est prévu, qui peut être utilisé pour remplacer le deuxième système de transport (3) entre le premier et troisième système de transport (2, 4), dans lequel la longueur (L) du système de transport d'échange (5) et/ou la largeur (w) d'un espace entre le premier système de transport (2) et le troisième système de transport (4) sont modifiables par un déplacement en translation ou un pivotement d'au moins une unité de renvoi (2.2, 4.2, 5.2, 5.3), dans lequel le deuxième système de transport (3) pour l'insertion du système de transport d'échange (5) est déplaçable à partir d'une première position, dans laquelle un transport d'unités d'emballages a lieu, dans une deuxième position non active, et dans lequel le deuxième système de transport (3) est constitué de plusieurs sections de système de transport (3a, 3b) et que les sections de système de transport (3a, 3b) sont déplaçables dans des directions opposées pour occuper la deuxième position non active perpendiculairement au sens de transport (TR), **caractérisé en ce que** le système de transport d'échange (14, 15) est constitué d'un seul segment de transport.

2. Dispositif selon la revendication 1, **caractérisé en ce que** le système de transport d'échange (5) et/ou le premier système de transport (2) et/ou le troisième système de transport (4) présente un élément de transport (2.1, 4.1, 5.1) en circulation, qui circule sur au moins deux unités de renvoi (2.2, 2.3, 4.2, 4.3, 5.2, 5.3) définissant la longueur de convoyage (l₁, l₂, l₃) de ces systèmes de transport (2, 4, 5), dans lequel la distance (d₁, d₂, d₃) des unités de renvoi (2.2, 2.3, 4.2, 4.3, 5.2, 5.3) du système de transport d'échange (5) et/ou du premier système de transport (2) et/ou du troisième système de transport (4) mesurée dans le sens de transport (TR) est modifiable.

3. Dispositif selon la revendication 2, **caractérisé en ce que** la position de l'une des unités de renvoi (2.2, 4.2, 5.2,) par rapport à l'au moins une autre unité de renvoi (2.3, 4.3, 5.3) est modifiable par un déplacement en translation ou un pivotement de l'unité de renvoi (2.2, 4.2, 5.2, 5.3) parallèlement au sens de transport (TR).

4. Dispositif selon la revendication 2 ou 3, **caractérisé en ce que**, pour le système de transport d'échange (5) et/ou le premier système de transport (2) et/ou le troisième système de transport (4), l'une des au moins deux unités de renvoi (2.2, 4.2, 5.2, 5.3) définissant la longueur de convoyage (l₁, l₂, l₃) peut être déplacée parallèlement au sens de transport (TR).

5. Dispositif selon la revendication 4, **caractérisé en ce que**, pour le premier système de transport (2) et/ou le troisième système de transport (4), une unité de renvoi (2.2, 4.2) disposée à proximité du système de transport d'échange (5) peut être déplacée parallèlement au sens de transport (TR).

6. Dispositif selon l'une quelconque des revendications précédentes, **caractérisé en ce que** des entraînements sont prévus pour le déplacement en translation ou pour le pivotement au moins partiel d'une unité de renvoi (2.2, 4.2, 5.2, 5.3).

7. Dispositif selon la revendication 6, **caractérisé en ce que** l'entraînement du système de transport d'échange (5) est prévu sur le système de transport d'échange (5) lui-même ou de manière fixe sur un bâti de machine (6), de sorte que l'entraînement peut être couplé à celui-ci lors de l'insertion du système de transport d'échange (5) pour la transmission de forces d'entraînement.

8. Dispositif selon l'une quelconque des revendications précédentes, **caractérisé en ce que** le système de transport d'échange (5) et/ou le premier système de transport (2) et/ou le troisième système de transport (4) présente des guidages, qui sont réalisés pour la modification de la longueur (L) du système de transport d'échange (5) et/ou pour la modification de la largeur (w) de l'espace entre le premier système de transport (2) et/ou le troisième système de transport (4) par un déplacement en translation ou pour le pivotement au moins partiel d'un axe de rotation d'une unité de renvoi (2.2, 4.2, 5.2, 5.3), sur lequel un élément de transport (2.1, 4.1, 5.1) du système de transport d'échange (5) et/ou du premier système de transport (2) et/ou du troisième système de transport (3) est renvoyé.

9. Dispositif selon l'une quelconque des revendications précédentes, **caractérisé en ce que** le système de transport d'échange (5) et/ou le premier système de transport (2) et/ou le troisième système de transport (4) présente un système de tension (7) pour la tension d'un élément de transport (2.1, 4.1, 5.1) en circulation.

10. Dispositif selon l'une quelconque des revendications précédentes, **caractérisé en ce qu'**un système de levage (8) est prévu pour lever et abaisser le système de transport d'échange (5).

11. Dispositif selon la revendication 10, **caractérisé en ce que** le système de levage (8) est réalisé de telle sorte que le système de transport d'échange (5) puisse être positionné dans une position inclinée lors du levage et de l'abaissement, pour laquelle l'axe longitudinal (LA) du système de transport d'échange (5) s'étend de manière inclinée par rapport à un plan horizontal.

12. Dispositif selon la revendication 11, **caractérisé en ce que** le système de levage (8) est réalisé pour le positionnement du système de transport d'échange (5) dans une position inclinée pour laquelle l'axe longitudinal (LA) du système de transport d'échange (5) forme un angle d'au moins 30° avec un plan horizontal.

13. Dispositif selon l'une quelconque des revendications précédentes, **caractérisé en ce que** le premier et/ou le troisième système de transport (2, 4) comprennent l'une des plusieurs tôles de poussée sur lesquelles les lots à transporter ou les unités d'emballage ou groupes d'unités d'emballage formant le lot ultérieur peuvent être déplacés par dérapage ou par glissement dans le sens de transport (TR) au moyen d'éléments de poussée entraînés de façon motorisée.

14. Procédé pour transformer un dispositif (1) selon l'une quelconque des revendications précédentes, comprenant un premier système de transport (2), un deuxième système de transport (3) suivant le premier système de transport (2) dans le sens de transport (TR) et un troisième système de transport (4) suivant le deuxième système de transport (3) dans le sens de transport (TR), dans lequel un système de transport d'échange (5) constitué d'un seul segment de convoyage est prévu, qui est utilisé lors de la transformation pour remplacer le deuxième système de transport (3) entre le premier et troisième système de transport (2, 4), **caractérisé en ce que** la longueur (L) du système de transport d'échange (5) et/ou la largeur (w) d'un espace entre le premier système de transport (2) et le troisième système de transport (4) sont modifiées par un déplacement en translation ou au moins un pivotement partiel d'au moins une unité de renvoi (2.2, 4.2, 5.2, 5.3).

15. Procédé selon la revendication 14, **caractérisé en ce que** le premier et/ou le troisième système de transport (2, 4) comprennent l'une des plusieurs tôles de poussée sur lesquelles les lots à transporter ou les unités d'emballage ou groupes d'unités d'emballage formant le lot ultérieur sont déplacés par dérapage ou glissement dans le sens de transport (TR) au moyen d'éléments de poussée entraînés de façon motorisée.
